# EUROPEAN PATENT APPLICATION

(11) **EP 2 105 450 A1**
(43) Date of publication of application: **30.09.2009**
(21) Application number: 08300164.4
(22) Date of filing: 28.03.2008
(51) Int. Cl.: C08F 20/34, C08F 20/60

(54) **Antimicrobial polymers**

(71) Applicant: Catalyse SARL, 13011 Marseille (FR); LONZA, INC., Allendale, NJ 07401-1613 (US)
(72) Inventor: Charcosset, Patrice, 92270 Bois Colombes (FR); Périchaud, Alain, 13013 Marseille (FR)
(74) Representative: Riegler, Norbert Hermann

(57) **Abstract**

The invention relates to antimicrobial polymers comprising at least one moiety of formula 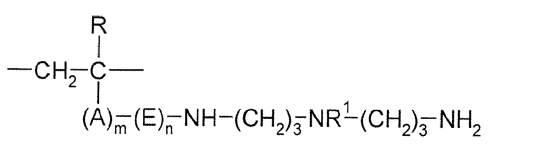 wherein
R is hydrogen or methyl,
R¹ is C₆₋₁₈ alkyl,
m and n independently are 0 or 1, with the proviso that at least one of m and n is 1, A is C₁₋₄ alkanediyl or -(*p*-C₆H₄-CH₂)-,
and E is selected from the group consisting of -C(=O)-, -OC(=O)- and -NH-C(=O)-. The amino group-containing side chain imparts antimicrobial properties to the polymers, which may be homo- or copolymers. The polymers can be prepared by homo- or copolymerization of suitably substituted vinylic compounds which are also part of the invention.

## Description

The invention relates to antimicrobial polymers comprising polymer-bound antimicrobial amines. In particular, it relates to polymers comprising at least one moiety of formula 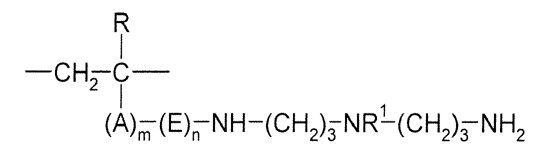 wherein
R is hydrogen or methyl,
R¹ is C₆₋₁₈ alkyl,
m and n independently are 0 or 1, with the proviso that at least one of m and n is 1,
A is C₁₋₄ alkanediyl or -(*p*-C₆H₄-CH₂)-,
and E is selected from the group consisting of -C(=O)-, -OC(=O)- and -NH-C(=O)-.

The invention further relates to a process for the preparation of the antimicrobial polymers according to the invention, to monomers useful as starting materials in the preparation of the antimicrobial polymers, and to a process for the preparation of said monomers.

Polymer materials having antimicrobial properties are known in the art. US 5849311 discloses polymers which are surface-modified with antimicrobial metal compounds such as silver iodide. WO 84/02915 and EP 0156632 disclose antifouling paints based on polymeric binders obtained by polymerization of vinylic compounds having various hydrolysable side chains, such as alkyl carboxylate groups with terminal quaternary ammonium groups which impart biocidal properties to the polymers. Various other polymers having quaternary ammonium groups are disclosed in several other patent documents.

The above mentioned polymers with quaternary ammonium groups require the presence of anions to compensate the positive charge of the ammonium groups by salt formation. The resulting strongly polar ion pairs can result in compatibility problems with nonpolar polymers such as polyolefins. Moreover, the ammonium functionality imparts anion-exchange properties to the polymers which may be undesired since to some extent the physical and chemical properties of the polymer will depend on the type of anions that are actually present (and may change during the life time of the polymer). For example, when the surface of the polymer is cleaned with an anionic surfactant (such as a soap), the anions of the surfactant can replace the anions originally present at the polymer surface and thus change its properties. Quaternary ammonium compounds are not thermally stable and can undergo a Cope elimination when heated above about 130 °C. Since that temperature is well below the typical processing (e.g., molding) temperatures of thermoplastics, the applications of polymers with quaternary ammonium groups are quite limited.

It is an objective of the present invention to provide a polymer having antimicrobial properties without containing metallic compounds or ionic moieties.

According to the invention, this objective has been achieved by a polymer comprising at least one repeating moiety of formula 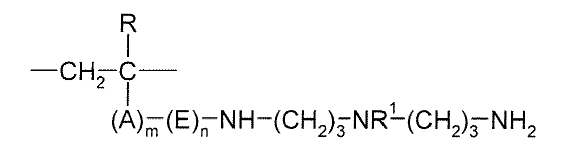 wherein
R is hydrogen or methyl;
R¹ is C₆₋₁₈ alkyl;
m and n independently are 0 or 1, with the proviso that at least one of m and n is 1;
A is C₁₋₄ alkanediyl or -(*p*-C₆H₄-CH₂)-;
and E is selected from the group consisting of -C(=O)-, -OC(=O)- and -NH-C(=O)-.
The proviso means that at least one of the spacer groups A and E is present. If present, E is forming a functional group together with the adjacent nitrogen atom. When E is -C(=O)-, the resulting functional group will be a secondary amide group, while -OC(=O)- will form an urethane group and -NH-C(=O)- will form a disubstituted urea.

The polymer is non-crosslinked and may be a homopolymer or a copolymer. It does not contain any strongly polar groups and its thermal stability is not limited by undesired reactions occurring at relatively low temperatures. The amino group-containing side chain can be expected to impart to the polymer an antibacterial activity spectrum different from that of quaternary ammonium compounds. In particular, since *N,N*-bis-(3-aminopropyl)dodecylamine is known to be effective against difficult-to-control bacteria such as *Mycobacterium tuberculosis*, it is likely to exhibit the same activity when attached to a polymeric backbone. An advantage of the polymer-bound form of *N,N*-bis-(3-aminopropyl)dodecylamine resides in the fact that the polymeric form has a better thermal stability than the free amine which begins to volatilize and/or decompose at temperatures above about 170 °C.

Copolymers according to the invention further comprise at least one repeating moiety of formula 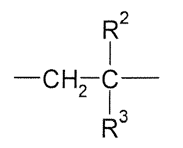 wherein R² is hydrogen or methyl;
R³ is selected from the group consisting of hydrogen, chlorine, cyano, -COOR⁴, -OR⁵, -OC(=O)R⁶, -C(=O)-NR⁷R⁸, C₁₋₄ alkyl and phenyl;
and wherein R⁴, R⁵ and R⁶ are C₁₋₄ alkyl and R⁷ and R⁸ are independently hydrogen or C₁₋₄ alkyl.

In a preferred embodiment, R² is methyl and R³ is -COOCH₃, which corresponds to a copolymer derived from methyl methacrylate as comonomer.

The alkyl side chain R¹ is preferably a linear C₈₋₁₂ alkyl group. However, R¹ is not necessarily the same group at each occurrence, since it is also possible to use homologous mixtures derived from natural products (i.e., fatty amines) as starting material for the synthesis of the polymers of the invention.

In a more preferred embodiment, R¹ is *n*-octyl or *n*-dodecyl, the latter being particularly preferred.

In another preferred embodiment, m is 1, n is 0 (i.e., E is absent), and A is -CH₂-.

In still another preferred embodiment, m is 1, n is 1, A is -CH₂- and E is -OC(=O)-, thus providing a urethane group in the side chain.

The polymers of the invention can be prepared by polymerizing the corresponding monomers, i.e., by providing a monomer system comprising at least one monomer of formula 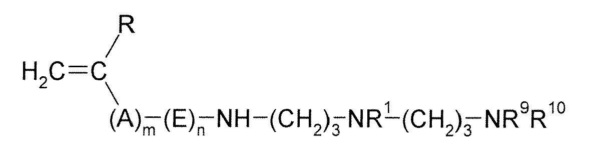 wherein R, R¹, m, n, A and E are as defined above,
and R⁹ and R¹⁰ are independently hydrogen or amino-protective groups or R⁹ and R¹⁰ together are a divalent amino-protective group,
and polymerizing said monomer system, and, if R⁹ and/or R¹⁰ are amino-protective groups, removing said amino-protective groups, to obtain a polymer comprising at least one repeating moiety of formula 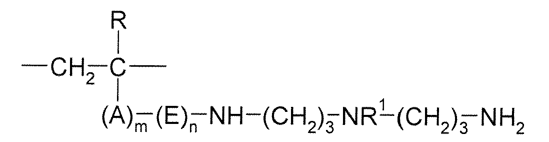 wherein R, R¹, m, n, A and E are as defined above.

Amino-protective groups may be e.g. those commonly used in peptide chemistry, such as BOC (*tert*-butoxycarbonyl) or mono- or divalent acyl groups, such as acetyl or phthaloyl.

The polymerization can be carried out using methods known in the art for polymerization of olefinic compounds, such as thermal or radiation-induced polymerization.

Copolymers comprising one or more (i.e., different) additional repeating units of formula 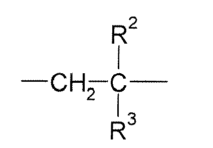 wherein R² and R³ are as defined above, can be prepared by adding at least one corresponding monomer of formula 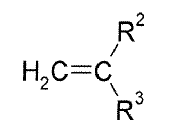 wherein R² and R³ are as defined above, to the monomer system mentioned above and (co)polymerizing the resulting monomer system. In a preferred embodiment of the copolymerization process, R² is methyl and R³ is -COOCH₃, i.e., the additional monomer is methyl methacrylate.

In another preferred embodiment, R¹ is a linear C₈₋₁₂ alkyl group. More preferably, R¹ is *n*-octyl or *n*-docecyl, the latter being particularly preferred.
In another preferred embodiment, m is 1, n is 0, and A is -CH₂-.

In still another preferred embodiment, m is 1, n is 1, A is -CH₂-, and E is -OC(=O)-.

When a monomer having a protected terminal amino group is used as starting material, R⁹ and R¹⁰ together are preferably a phthaloyl group, thus forming a phthalimide moiety together with the amino nitrogen.

The monomers required as starting materials are also an object of the present invention. In particular, these are the compounds of formula 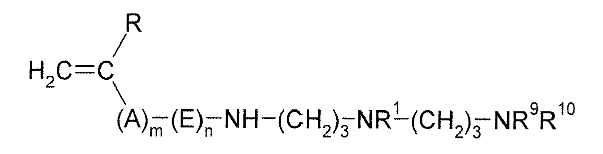 wherein
R is hydrogen or methyl,
R¹ is C₆₋₁₈ alkyl,
R⁹ and R¹⁰ are independently hydrogen or amino-protective groups or R⁹ and R¹⁰
together are a divalent amino-protective group,
m and n independently are 0 or 1, with the proviso that at least one of m and n is 1,
A is C₁₋₄ alkanediyl or -(*p*-C₆H₄-CH₂)-,
and E is selected from the group consisting of -C(=O)-, -OC(=O)- and -NH-C(=O)-.

In a preferred embodiment, R¹ is *n*-C₈₋₁₂ alkyl, more preferably *n*-octyl or *n*-dodecyl.

In another preferred embodiment, m is 1, n is 0 and A is -CH₂-.

In still another preferred embodiment, m is 1, n is 1, A is -CH₂- and E is -OC(=O)-.

The monomers required as starting materials of the polymerization process of the invention can be prepared by a process comprising the step of reacting the corresponding amine of formula

H₂N-(CH₂)₃-NR¹-(CH₂)₃-NR⁹R¹⁰,

wherein R¹, R⁹ and R¹⁰ are as defined above, with a suitable olefinic compound of formula 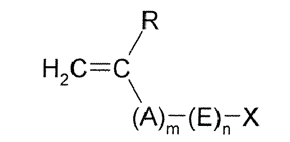 wherein R, A, E, m and n are as defined above, and X is a leaving group.

Suitable leaving groups are in particular halogens, such as chlorine, bromine or iodine, or other leaving groups known in the art, such as alkane- or arenesulfonyl groups. Examples of suitable olefinic compounds are alkenyl halides, alkenoyl halides, alkenyl chloroformates or alkenylcarbamoyl halides, such as allyl bromide, vinyl chloroformate, allyl chloroformate, 1-propen-2-yl chloroformate, 3-buten-1-yl chloroformate, acryloyl chloride, allylcarbamoyl chloride, and the like. Depending on the reactivity of said olefinic compound and the selectivity of the reaction it may be advantageous to use a protected form of the triamine, wherein R⁹ and/or R¹⁰ are amino-protective groups selected from the protective groups known in the art. After the reaction with the olefinic compound or after the polymerization step the amino-protective groups can be removed using methods known in the art. R⁹ and R¹⁰ together may also be a divalent amino-protective group such as phthaloyl, maleoyl or succinyl.

The antimicrobial polymers of the instant invention may be used as antimicrobial materials and/or coatings, e.g. in industrial equipment such as filters, pumps, tank coatings, hoses and piping, walls and flooring in clean rooms; medicinal and hygiene articles and hospital equipment, such as paper and non-woven disposable masks, hospital coats and jackets, patient gowns, hospital sheets and bed coverings, wheels and casters for gurneys and beds, coatings for metal and plastic surfaces in gurneys, beds, cabinets and stands, hygienic paints, coatings and floorings for operating rooms, patient wards and hallways, infusion bags, catheters, endoscopes and prostheses; materials and equipment for food processing, catering and restaurants, such as trays, counters, sinks, shelves, hygienic walls and flooring , bottle and can coatings, tanks for processing food, foot and shoe dips; household items and clothing, such as mattress covers and curtains; professional clothing such as lab coats and jackets; electronic items such as keyboards, touch screens, telephones, including disposable covers for same; and anti-fouling paints for watercraft and other surfaces exposed to aqueous media.

The following non-limiting examples will further illustrate the instant invention.

### Example 1

### N'-Allyl-N,N-bis-(3-aminopropyl)dodecylamine

*N,N*-Bis-(3-aminopropyl)dodecylamine (10 g, 33.4 mmol) was dissolved in dichloromethane (230 mL). Potassium carbonate (4.0 g, 33.4 mmol) was added and a solution of allyl bromide (2.0 g, 16.7 mmol) in dichloromethane (53 mL) was added dropwise with stirring at room temperature during 5 h. The reaction mixture was stirred at room temperature for another 15 h and the filtered through a Büchner funnel equipped with a Whatman® GF/B glass microfiber filter covered with a 4-5 mm layer of Celite®. The solvent was evaporated *in vacuo*. After addition of diethyl ether, a white precipitate of *N,N*-bis-(3-aminopropyl)dodecylamine hydrobromide formed. The precipitate was filtered off and the filtrate was concentrated in vacuo to yield *N'*-allyl-*N,N*-bis-(3-aminopropyl)dodecylamine as a yellowish oil.
Yield: 80%, based on allyl bromide.

¹H NMR (CDCl₃, 300 MHz): δ = 0.77 (t, 3H), 1.16 (m, 18H), 1.30 (quint, 2H), 1.53 (m, 4H), 2.26 (t, 2H), 2.32 (t, 4H), 2.53 (t, 2H), 2.61 (t, 2H), 3.14 (dd, 2H), 5.08 (m, 2H), 5.81 (m, 2H).

¹³C NMR (75 MHz, CDCl₃): δ = 13.91, 22.48, 26.87, 27.40, 29.47, 30.83, 31.72, 31.75, 40.59, 48.09, 51.72, 52.37, 52.45, 53.99, 115.39, 136.81.

### Example 2

### N'-(Allyloxycarbonyl)-N,N-bis-(3-aminopropyl)dodecylamine

*N,N*-Bis-(3-aminopropyl)dodecylamine (1 g) was dissolved in dichloromethane (50 mL) containing potassium carbonate (1 g). Allyl chloroformate (0.35 mL) was added dropwise while the reaction mixture was stirred for 3 h at room temperature. The solvent was evaporated in vacuo and water was added to the residue. The aqueous solution was maintained at pH >7 and extracted with dichloromethane. The organic phase was dried over anhydrous sodium sulfate, filtered and then concentrated in vacuo to give *N'*-(allyloxycarbonyl)-*N,N*-bis-(3-aminopropyl)dodecylamine.
Yield: 70%, based on allyl chloroformate.

¹H NMR (CDCl₃, 300 MHz): δ = 0.87 (t, 3H), 1.16 (m, 18H) 1.49 (q 2H), 1.49 (quint, 2H), 2.24 (t, 2H), 2.37 (2 t, 4H), 2.63 (t, 2H), 3.12 (t, 2H), 4.46 (dd, 2H), 5.11 (dd, 2H), 5.84 (m, 1 H).

¹³C NMR (CDCl₃, 75 MHz): δ = 13.9, 22.47, 26.68, 27.4, 29.14, 29.44 (6C), 31.71, 31.71, 39.89, 40.59, 51.76, 52.14, 53.99, 65.03, 117.02, 133.01, 155.87.

### Example 3

### N'-(tert-Butoxycarbonyl)-N,N-bis(3-aminopropyl)dodecylamine

*N,N*-Bis-(3-aminopropyl)dodecylamine (16.4 g) was dissolved in chloroform (150 mL). A solution of di-*tert*-butyl dicarbonate (2.4 g) in chloroform (100 mL) was added dropwise at 5 °C. The stirred mixture was left overnight at ambient temperature and then filtered. After filtration, the solvent was distilled off *in vacuo*. The residue was taken up with brine and stirred overnight at ambient temperature. The aqueous phase was extracted with ethyl acetate. The combined organic layers were dried with anhydrous sodium sulfate and the solvent was evaporated *in vacuo* to yield the product as pale yellowish oil.
Yield: 80%.

¹H NMR (CDCl₃, 300 MHz): δ = 0.75 (t, 3H), 1.13 (m, 18H), 1.3 (s, 9H), 1.48 (m, 4H), 2.23 (t, 2H), 2.31 (2 t, 4H), 2.61 (t, 2H), 3.04 (t, 2H).

¹³C NMR (CDCl₃, 75 MHz): δ = 13.83, 22.41, 26.41, 27.47, 29.2, 28.21, 29.50, 31.65, 31.65, 40.31, 40.31, 51.64, 52.58, 53.97, 78.5, 155.87.

### Example 4

### N'-Acryloyl-N"-(tert-butoxycarbonyl)-N,N-bis(3-aminopropyl)dodecylamine

*N'*-(*tert*-Butoxycarbonyl)-*N,N*-bis(3-aminopropyl)dodecylamine (prepared according to Example 3; 5 g) was dissolved in dichloromethane. Potassium carbonate (5 g) and acryloyl chloride (1 mL) was added and the stirred reaction mixture was left overnight at room temperature. After filtration over Celite®, the solvent was evaporated and the residue was taken up with water. Potassium carbonate was added until a basic pH was obtained. The aqueous phase was extracted with dichloromethane and the combined organic layers were dried over anhydrous sodium sulfate. The solvent was evaporated *in vacuo*.
Yield: 70%.

¹H NMR (CDCl₃, 300 MHz): δ = 0.84 (t, 3H), 1.22 (m, 18H), 1.4 (s, 9H), 1.6 (m, 4H), 2.29 (t, 2H), 2.39 (2 t, 4H), 3.13 (t, 2H), 3.37 (t, 2H), 5.55 (dd, 1 H), 6.18 (2 dd, 2H).

¹³C NMR (CDCl₃, 75 MHz): δ = 14.04, 22.61, 26.41, 27.47, 28.21, 29.2, 29.50, 31.65, 31.65, 38.39, 39.38, 52.02, 52.5, 53.97, 78.5, 125.49, 131.29, 156.05, 165.57.

### Example 5

### N'-Acryloyl-N,N-bis(3-aminopropyl)dodecylamine

A solution of aqueous hydrochloric acid (1 N, 10 mL) in ethanol (164 mL) was added to *N'*-acryloyl-*N"*-(*tert*-butoxycarbonyl)-*N,N*-bis(3-aminopropyl)dodecylamine (prepared according to Example 4; 5 g) and the resulting mixture was stirred overnight. The solvent was evaporated, the residue was taken up with brine, and the aqueous phase was extracted with dichloromethane (2x) and then with ethyl acetate (2×). The combined organic layers were dried with anhydrous sodium sulfate and the solvents were evaporated.
Yield: 25%.

¹H NMR (CDCl₃, 300 MHz): δ = 0.8 (t, 3H), 1.17 (m, 18H), 1.32 (quint, 2H), 1.59 (m, 4H), 2.27 (t, 2H), 2.36 (2 t, 4H), 2.56 (t, 2H), 3.32 (t, 2H), 5.53 (dd, 1 H), 6.15 (2 dd, 2H).

¹³C NMR (CDCl₃, 75 MHz): δ = 13.97, 22.53, 26.41, 27.47, 29.2, 29.50, 31.77, 31.77, 36.2, 38.25, 51.75, 51.87, 53.60, 125.51, 131.1, 165.67.

### Example 6

### N'-Acryloyl-N,N-bis(3-aminopropyl)dodecylamine (direct synthesis)

A solution of acryloyl chloride (33 mmol) in of diethyl ether (30 mL) was added dropwise during 2 h to a stirred solution of *N,N*-bis(3-aminopropyl)dodecylamine (30 mmol) and triethylamine (30 mmol) in diethyl ether (100 mL). A precipitate of triethylammonium chloride formed rapidly. After another 3-4 h of stirring the precipitate was filtered off and the ether and any excess of triethylamine was evaporated *in vacuo*. The product was obtained as a yellow-brown viscous liquid.
Yield: 80%

### Example 7

### N'-(3-Buten-1-yloxycarbonyl)-N,N-bis-(3-aminopropyl)dodecylamine

*N,N*-Bis-(3-aminopropyl)dodecylamine (1 g) was mixed with dichloromethane (50 mL) and potassium carbonate (1 g). 3-Buten-1-yl chloroformate (0.35 mL) was added dropwise at ambient temperature. The mixture was stirred for 3 h. The solvent was then evaporated *in vacuo* and then water was added and the mixture was maintained at pH >7. The aqueous phase was then extracted with dichloromethane. The organic phase was dried with anhydrous sodium sulfate and the solvent was evaporated *in vacuo.*
Yield: 65%.

¹H NMR (CDCl₃, 300 MHz): δ = 0.86 (t, 3H), 1.26 (m, 18H), 1.52 (2 quint, 4H), 2.24 (t, 2H), 2.27(m, 2H), 2.37 (2 t, 4H), 2.63 (t, 2H), 3.09 (t, 2H), 4.12 (t, 2H), 4.9 (dd, 1 H), 5.01 (dd, 1H), 5.74 (m, 1 H).

¹³C NMR (75 MHz, CDCl₃): δ = 13.97, 22.45, 26.78, 27.4, 29.14, 29.44, 31.71, 31.71 33.2, 39.89, 40.59, 51.76, 52.14, 53.99, 65.03, 117.02, 133.01, 155.87.

### Example 8

### N'-(1-Propen-2-yloxycarbonyl)-N,N-bis-(3-aminopropyl)dodecylamine

*N,N*-Bis-(3-aminopropyl)dodecylamine (1 g) was mixed with dichloromethane (50 mL) and potassium carbonate (1 g). 1-Propen-2-yl chloroformate (0.35 mL) was added dropwise at ambient temperature. The mixture was stirred for 3 h. The solvent was then evaporated *in vacuo* and then water was added and the mixture was maintained at pH >7. The aqueous phase was then extracted with dichloromethane. The organic phase was dried with anhydrous sodium sulfate and the solvent was evaporated *in vacuo*.
Yield: 64%.

¹H NMR (CDCl₃, 300 MHz): δ = 0.8 (t, 3H), 1.19 (m, 18H), 1.53 (quint, 2H), 1.62 (quint, 2H), 1.85 (s, 3H), 2.3 (t, 2H), 2.37 (2 t, 4H), 3.35 (t, 2H), 4.4 (d, 1 H), 4.63 (d, 1 H).

¹³C NMR (75 MHz, CDCl₃): δ = 13.95, 19.67, 22.52, 26.49, 27.45, 29.5, 30.89, 31.75, 31.83, 40.04, 40.66, 51.81, 52.28, 54.05, 100.77, 152.81, 153.54.

### Example 9

### N'-(Vinyloxycarbonyl)-N,N-bis-(3-aminopropyl)dodecylamine

*N,N*-Bis-(3-aminopropyl)dodecylamine (1 g) was mixed with dichloromethane (50 mL) and potassium carbonate (1 g). Vinyl chloroformate (0.34 mL) was added dropwise at ambient temperature. The mixture was stirred for 3 h. The solvent was then evaporated *in vacuo* and then water was added and the mixture was maintained at pH >7.

The aqueous phase was then extracted with dichloromethane. The organic phase was dried with anhydrous sodium sulfate and the solvent was evaporated *in vacuo*.
Yield: 68%.

¹H NMR (CDCl₃, 300 MHz): δ = 0.83 (t, 3H), 1.21 (m, 18H), 1.53 (quint, 2H), 1.62 (quint, 2H), 2.32 (t, 2H), 2.42 (2 t, 4H), 2.67 (t, 2H), 3.23, (t, 2H), 4.35 (dd, 1H), 4.63 (dd, 1H), 7.14 (dd, 1H).

¹³C NMR (75 MHz, CDCl₃): δ = 14.02, 22.6, 26.5, 27.53, 29.56, 30.96, 31.83, 31.83, 40.07, 40.76, 51.88, 52.31, 54.14, 94.53, 142.09, 153.54.

### Example 10

### N'-(p-Vinylbenzyl)-N,N-bis(3-aminopropyl)dodecylamine

*N,N*-Bis-(3-aminopropyl)dodecylamine (10 g, 33.4 mmol) was mixed with dichloromethane (100 mL) and potassium carbonate (4.0 g, 33.4 mmol). A solution of *p*-vinylbenzyl chloride (5 g, 33,4 mmol) in dichloromethane (50 mL) was added dropwise. The mixture was stirred overnight at ambient temperature and then filtered. The solvent was then evaporated *in vacuo* and then diethyl ether (100 mL) was added. A white precipitate formed and was filtered off. The filtrate was concentrated *in vacuo* and the dry residue was taken up with dichloromethane. Another precipitate formed and was filtered off. The solvent was evaporated and the desired product was obtained as yellowish oil.
Yield: 65%.

¹H NMR (CDCl₃, 300 MHz): δ = 0.84 (t, 3H), 1.22 (m, 18H), 1.34 (quint, 2H), 1.60 (2 quint, 4H), 2.35 (t, 2H), 2.41 (2 t, 4H), 2.61 (t, 2H), 2.72 (t, 2H), 3.54 (s, 2H), 5.21 (dd, 1 H), 5.73 (dd, 1 H), 6.70 (dd, 1 H), 7.30-7.45 (m, 4H)

¹³C NMR (75 MHz, CDCl₃): δ = 13.99, 225.56, 26.85, 27.49, 29.54, 30.83, 31.46, 31.79, 40.53, 48.01, 51.85, 52.34, 53.68, 54.03, 113.23, 126.08, 128.18, 136.14, 136.46, 139.98.

### Example 11

### N'-Acetyl-N"-acryloyl-N,N-bis(3-aminopropyl)dodecylamine

A solution of aqueous hydrochloric acid (1 N, 10 mL) in acetic acid (164 mL) was added to *N'*-acryloyl-*N"*-(*tert*-butoxycarbonyl)-*N,N*-bis(3-aminopropyl)dodecylamine (prepared according to Example 4; 5 g). After stirring the mixture overnight, the solvent was evaporated. Brine was added to the residue and the aqueous phase was extracted with dichloromethane (2×) and ethyl acetate (2×). The combined organic phases were dried with anhydrous sodium sulfate and the solvent was evaporated to obtain the desired product.
Yield: 30%.

¹H NMR (CDCl₃, 300 MHz): δ = 0.8 (t, 3H), 1.15 (m, 18H), 1.57 (2 quint, 4H), 1.96 (s, 3H), 2.25 (t, 2H), 2.37 (2 t, 4H), 3.28 (t, 2H), 3.3 (t, 2H), 5.48 (dd, 1 H), 6.15 (2 dd, 2H).

¹³C NMR (75 MHz, CDCl₃): δ = 13.98, 20.81, 22.49, 26.39, 27.47, 29.45, 29.45, 31.72, 31.72, 38.37, 38.39, 51.8, 53.26, 53.95, 125.49, 131.29, 165.61, 170.9.

### Example 12

### N'-Allyl-N"-phthaloyl-N,N-bis(3-aminopropyl)dodecylamine

*N'*-Allyl-*N,N*-bis(3-aminopropyl)dodecylamine (prepared according to Example 1; 3.39 g, 10 mmol) was dissolved in acetic acid (40 mL). Phthalic anhydride (1.48 g, 10 mmol) was added and the stirred mixture was heated overnight under reflux. The solvent was evaporated *in vacuo*, water (50mL) was added and the mixture was maintained at pH >7. The aqueous phase was extracted with dichloromethane. The combined organic layers were dried with anhydrous sodium sulfate and the solvent was evaporated in vacuo. The product was obtained as an oil.
Yield: 85%.

¹H NMR (CDCl₃, 300 MHz): δ = 0.84 (t, 3H), 1.21 (m, 18H), 1.5 (quint, 2H), 1.78 (2 quint, 4H), 2.34 (t, 2H), 2.44 (2 t, 4H), 2.61 (t, 2H), 3.21 (dd, 2H), 3.71 (t, 2H), 5.10 (dd, 2H), 5.92 (m, 1 H), 7.67 (m, 2H), 7.81 (m, 2H).

¹³C NMR (75 MHz, CDCl₃): δ = 14.02, 22.59, 26.13, 27.47, 29.56, 30.83, 31.72, 31.83, 36.42, 48.01, 51.38, 52.46, 53.01, 53.88, 115.65, 123.01, 132.15, 133.74, 136.1, 168.25

### Example 13

### UV-Induced radical polymerization

*N*'-Acryloyl-*N,N*-bis(3-aminopropyl)dodecylamine (prepared according to Example 5; 0.2 g) and Darocur® 1173 (2-hydroxy-2-methyl-1-phenyl-1-propanone; 0.01 g) photoinitiator were dissolved in ethanol (0.4 g) and then applied to a glass plate using a 25 µm calibrated bar. After evaporation of the solvent, a monomer film of approximately 8 µm thickness was obtained. The film was passed twice, at a linear velocity of 5 m/min, through the focus of a UV irradiator (Model F300S, Fusion UV Systems Inc, Gaithersburg, Maryland, USA) delivering UV radiation of 200-450 nm wavelength to a linear focus at a (linear) radiation density of 120 W/cm, to obtain a yellow slightly sticky polymer film.
The compounds of Example 9 (*N*'-(vinyloxycarbonyl)-*N,N*-bis-(3-aminopropyl)dodecylamine) and Example 10 (*N*'-(*p*-vinylbenzyl)-*N,N*-bis(3-aminopropyl)dodecylamine) have been polymerized in a similar way. The results are compiled in Table 1 below

**Table 1**

| Monomer (Example #) | Photoinitiator | Result |
|---|---|---|
| 9 | Darocur^{®} TPO¹ | yellow solid film, very sticky, 7-8 passages required |
| 10 | Irgacure^{®} 907² | sticky gel |
| 10 | Irgacure^{®} 369³ | sticky gel |
| 10 | Quantacure^{™} ITX⁴ | solid film |

| | | |
|---|---|---|
| ¹ Darocur® TPO = diphenyl(2,4,6-trimethylbenzoyl)phosphine oxide ² Irgacure® 907 = 2-methyl-1-[4-(methylthio)phenyl]-2-(4-morpholinyl)-1-propanone ³ Irgacure® 369 = 2-benzyl-2-(dimethylamino)-1-[4-(4-morpholinyl)phenyl]-1-butanone ⁴ Quantacure™ ITX (≈ Darocur^{®} ITX) = 2-isopropylthioxanthene-9-one | | |

### Example 14

### Thermal radical polymerization of N'-acetyl-N"-acryloyl-N,N-bis(3-aminopropyl)dodecylamine

*N'*-Acetyl-*N"*-acryloyl-*N,N*-bis(3-aminopropyl)dodecylamine (prepared according to example 11; 1.1 g) and azobisisobutyronitrile (0.05 g) were dissolved in of ethanol (20 mL) and heated under nitrogen at reflux temperature for 12 h. The polymer precipitated on cooling the reaction mixture. This yellow precipitate was then filtrated and dried.

### Example 15

### Thermal radical polymerization of N'-(vinyloxycarbonyl)-N,N-bis-(3-aminopropyl)dodecylamine

*N*'-(Vinyloxycarbonyl)-*N,N*-bis-(3-aminopropyl)dodecylamine (prepared according to example 9; 1.1 g) and *tert*-butyl perbenzoate (0.05 g) were dissolved in of toluene (20 mL) and heated under nitrogen at reflux temperature for 18 h. The reaction product was obtained after toluene evaporation as a very viscous dark liquid.

### Example 16

### Cationic polymerization of N'-allyl-N,N-bis-(3-aminopropyl)dodecylamine

*N'*-Allyl-*N,N*-bis-(3-aminopropyl)dodecylamine (prepared according to Example 1; 0.5 g) was dissolved in 1,2-dichloroethane (20 mL). Titanium tetrachloride (1 M solution in dichloromethane, 0.25 mL) was diluted with dichloromethane (50 mL) and the resulting solution was continuously (using a peristaltic pump) added during 1 h to the above dichloroethane solution. The reaction mixture was allowed to stand at room temperature for another 24 h. The solvent(s) were removed *in vacuo* using a rotary evaporator to obtain a transparent bright red gel. The polymer was precipitated by addition of acetone (-50 mL), filtered off using a G5 glass filter frit, and dried to obtain a bright pink powder.

¹H NMR (D₂O, 300 MHz): δ = 0.84 (t, *J*= 6.23 Hz, 3H), 1.25 (br. s., 20H), 1.49 (br. s., 2H), 1.79-1.94 (m, *J*= 7.84 Hz, 4H), 2.62 (d, *J*= 7.74 Hz, 2H), 2.68 (d, *J*= 7.74 Hz, 4H), 2.98 (t, *J*= 7.46 Hz, 4H).
¹³C NMR (D₂O, 75 MHz): δ = 13.65, 22.30, 23.61, 24.84, 26.99, 28.98, 29.27, 29.72, 31.55, 37.79, 50.17, 53.46.

### Example 17

### Thermal copolymerization of N'-acryloyl-N,N-bis-(3-aminopropyl)dodecylamine and methyl methacrylate

*N'*-Acryloyl-*N,N*-bis(3-aminopropyl)dodecylamine (prepared according to Example 6; 1.1 g), methyl methacrylate (0.5 g) and azobisisobutyronitrile (0.035 g) were dissolved in ethanol (20 mL) and heated under nitrogen at reflux temperature for 12 h. The polymer was then precipitated by addition of water (100 mL) and dried.

### Example 18

### Photo-copolymerization of N'-acryloyl-N,N-bis(3-aminopropyl)dodecylamine and 1,6-hexamethylene diacrylate

*N*'-Acryloyl-*N,N*-bis(3-aminopropyl)dodecylamine (prepared according to Example 5; 0.2 g), 1,6-hexamethylene diacrylate (0.5 g) and Darocur® 1173 (0.035 g) were dissolved in ethanol (0.4 g) and then applied to a glass plate using a 25 µm calibrated bar. After evaporation of the solvent, a monomer film of approximatively 8 µm thickness was obtained. The film was passed twice, at a linear velocity of 5 m/min, through the focus of a UV irradiator (Model F300S, Fusion UV Systems Inc, Gaithersburg, Maryland, USA) delivering UV radiation of 200-450 nm wavelength to a linear focus at a (linear) radiation density of 120 W/cm to obtain a yellow polymer film.

### Example 19

### Thermal polymerization of N'-acryloyl-N,N-bis(3-aminopropyl)dodecylamine

*N'*-Acryloyl-*N,N*-bis(3-aminopropyl)dodecylamine (prepared according to Example 5; 1.1 g) and azobisisobutyronitrile (0.03 g) were dissolved in ethanol (20 mL) and heated under nitrogen at reflux temperature for 12 h. The polymer was then precipitated by addition of water (100 mL) and dried.

### Example 20

### Cationic polymerization of N'-(allyloxycarbonyl)-N,N-bis(3-aminopropyl)dodecylamine

*N*'-(Allyloxycarbonyl)-*N,N-*bis(3-aminopropyl)dodecylamine (prepared according to Example 2; 0.5 g) was diluted with dichloromethane (20 mL). A TiCl₄ solution obtained by diluting TiCl₄ (1 M in dichloromethane, 0.25 mL) with dichloromethane (50 mL) was added dropwise during 1 h using a peristaltic pump. The reaction was allowed to continue at ambient temperature for 24 h. At the end of reaction the dichloromethane was evaporated *in vacuo* to obtain a dark brown viscous liquid. Diethyl ether (50 mL) was is then added in order to separate only the polymer which was obtained after drying as a brown precipitate.

### Example 21

### Cationic polymerization of N'-(3-buten-1-yloxycarbonyl)-N,N-bis(3-aminopropyl)dodecylamine

*N*'-(3-Buten-1-yloxycarbonyl)-*N,N*'-bis(3-aminopropyl)dodecylamine (prepared according to example 7; 0.5 g) was diluted with dichloromethane (20 mL). A TiCl₄ solution obtained by diluting TiCl₄ (1 M in dichloromethane, 0.25 mL) with dichloromethane (50 mL) was added dropwise during 1 h using a peristaltic pump. The reaction was allowed to continue at ambient temperature for 24 h. At the end of reaction the dichloromethane was evaporated *in vacuo* to obtain a transparent yellow viscous liquid. Diethyl ether (50 mL) was then added in order to separate only the polymer which was obtained as a yellow precipitate by filtration on a G5 glass filter frit.

### Antibacterial test results

The antimicrobial activity of the monomers and homopolymers prepared according to the preceding examples was tested using *E*. *coll* CIP 54.127 and *S. aureus* CIP 4.83 as test microorganisms. The microorganisms were incubated at 37 °C for 24 h and the minimum inhibiting concentration in liquid media was determined using a micro-dilution method according to the quantitative Japanese test method JIS-z- 2801-2000, using mother solutions containing 5 mg/mL (5000 mg/L) of the respective monomer or polymer in dimethyl sulfoxide. The results are compiled in Table 1 below.

**Table 1**

| | Minimum inhibiting concentration [mg/L] | | | | |
|---|---|---|---|---|---|
| | *E. coli* | | *S. aureus* | | |
| Compound of Example # | Monomer | Polymer | Monomer | Polymer | Remarks |
| 1 | 3-6 | 6-12 | 6-12 | 6-12 | |
| 2 | 6-12 | 3-6 | 6-12 | 6-12 | |
| 7 | 3-6 | 6-12 | 3-6 | 6-12 | |
| 9 | 6-12 | 50-100 | 3-6 | 50-100 | polymer insoluble |

## Claims

1. An antimicrobial polymer comprising at least one repeating moiety of formula 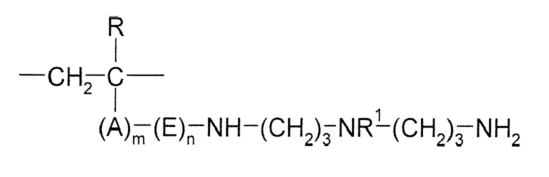 wherein
R is hydrogen or methyl;
R¹ is C₆₋₁₈ alkyl;
m and n independently are 0 or 1, with the proviso that at least one of m and n is 1;
A is C₁₋₄ alkanediyl or -(*p*-C₆H-CH₂)-;
and E is selected from the group consisting of -C(=O)-, -O-C(=O)- and -NH-C(=O)-.

2. The antimicrobial polymer of claim 1, which is a copolymer that further comprises at least one repeating moiety of formula 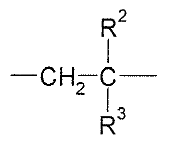 wherein R² is hydrogen or methyl;
R³ is selected from the group consisting of hydrogen, chlorine, cyano, -COOR⁴, -OR⁵, -OC(=O)R⁶, -C(=O)-NR⁷R⁸, C₁₋₄ alkyl and phenyl;
and wherein R⁴, R⁵ and R⁶ are C₁₋₄ alkyl and R⁷ and R⁸ are independently hydrogen or C₁₋₄ alkyl.

3. The antimicrobial polymer of claim 2, wherein R² is methyl and R³ is -COOCH₃.

4. The antimicrobial polymer of any of claims 1 to 3, wherein R¹ is *n*-C₈₋₁₂ alkyl.

5. The antimicrobial polymer of claim 4, wherein R¹ is *n*-octyl or *n*-dodecyl.

6. The antimicrobial polymer of any of claims 1 to 5, wherein m is 1, n is 0 and A is -CH₂-.

7. The antimicrobial polymer of any of claims 1 to 5, wherein m is 1, n is 1, A is -CH₂- and E is -OC(=O)-.

8. A process for the preparation of a polymer comprising at least one repeating moiety of formula 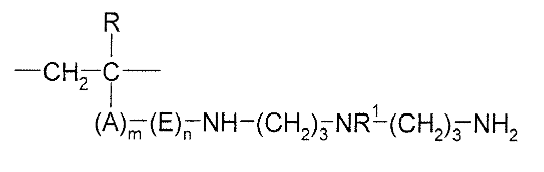 wherein
R is hydrogen or methyl,
R¹ is C₆₋₁₈ alkyl,
m and n independently are 0 or 1, with the proviso that at least one of m and n is 1,
A is C₁₋₄ alkanediyl or -(*p*-C₆H-CH₂)-,
and E is selected from the group consisting of -C(=O)-, -O-C(=O)- and -NH-C(=O)-,
said process comprising the steps of
providing a monomer system comprising at least one monomer of formula 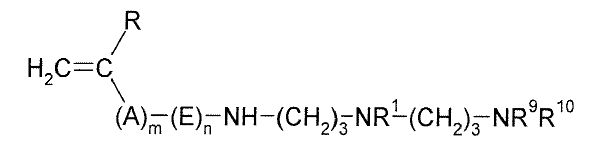 wherein R, R¹, m, n, A and E are as defined above,
and R⁹ and R¹⁰ are independently hydrogen or amino-protective groups or R⁹ and
R¹⁰ together are a divalent amino-protective group,
and polymerizing said monomer system, and, if R⁹ and/or R¹⁰ are amino-protective groups, removing said amino-protective groups.

9. The process of claim 8, wherein the monomer system further comprises at least one monomer of formula 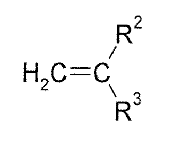 wherein R² is hydrogen or methyl,
R³ is selected from the group consisting of hydrogen, chlorine, cyano, -COOR⁴, -OR⁵, -OC(=O)R⁶, -C(=O)NR⁷R⁸, C₁₋₄ alkyl and phenyl,
and wherein R⁴, R⁵ and R⁶ are C₁₋₄ alkyl and R⁷ and R⁸ are independently hydrogen or C₁₋₄ alkyl,
to obtain a copolymer as defined in claim 2.

10. The process of claim 9, wherein R² is methyl and R³ is -COOCH₃.

11. The process of any of claims 8 to 10, wherein R¹ is *n*-C₈₋₁₂ alkyl.

12. The process of claim 11, wherein R¹ is *n*-octyl or *n*-dodecyl.

13. The process of any of claims 8 to 12, wherein m is 1, n is 0 and A is -CH₂-.

14. The process of any of claims 8 to 12, wherein m is 1, n is 1, A is -CH₂- and E is -OC(=O)-.

15. The process of any of claims 8 to 14, wherein R⁹ and R¹⁰ together are a phthaloyl group.

16. A compound of formula 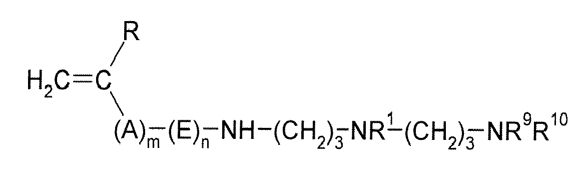 wherein
R is hydrogen or methyl,
R¹ is C₆₋₁₈ alkyl,
R⁹ and R¹⁰ are independently hydrogen or amino-protective groups or R⁹ and R¹⁰ together are a divalent amino-protective group,
m and n independently are 0 or 1, with the proviso that at least one of m and n is 1,
A is C₁₋₄ alkanediyl or -(*p*-C₆H₄-CH₂)-,
and E is selected from the group consisting of -C(=O)-, -OC(=O)- and -NH-C(=O)-.

17. The compound of claim 16, wherein R¹ is *n*-C₈₋₁₂ alkyl.

18. The compound of claim 17, wherein R¹ is *n*-octyl or *n*-dodecyl.

19. The compound of any of claims 16 to 18, wherein m is 1, n is 0 and A is -CH₂-.

20. The compound of any of claims 16 to 18, wherein m is 1, n is 1, A is -CH₂- and E is -OC(=O)-.

21. A process for the preparation of a compound of formula 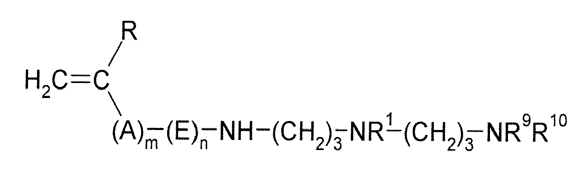 wherein
R is hydrogen or methyl,
R¹ is C₆₋₁₈ alkyl,
R⁹ and R¹⁰ are independently hydrogen or amino-protective groups or R⁹ and R¹⁰ together are a divalent amino-protective group,
m and n independently are 0 or 1, with the proviso that at least one of m and n is 1,
A is C₁₋₄ alkanediyl or -(*p*-C₆H₄-CH₂)-,
and E is selected from the group consisting of -C(=O)-, -OC(=O)- and -NH-C(=O)-,
said process comprising the step of reacting an amine of formula
H₂N-(CH₂)₃-NR¹-(CH₂)₃-NR⁹R¹⁰,
wherein R¹, R⁹ and R¹⁰ are as defined above,
with a compound of formula 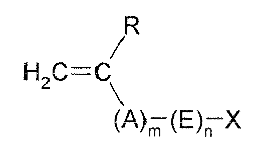 wherein R, A, E, m and n are as defined above, and X is a leaving group.

22. An antimicrobial coating comprising at least one polymer according to any one of claims 1 to 7.
